# EUROPEAN PATENT SPECIFICATION

(11) **EP 1 497 008 B1**
(45) Date of publication and mention of the grant of the patent: **27.07.2005**
(21) Application number: 03723515.7
(22) Date of filing: 24.04.2003
(51) Int. Cl.: B01D 1/20, B01D 1/18, F26B 3/12, B01J 2/04

(54) **SPRAY-DRYING DEVICE AND FEED MEANS FOR THIS SPRAY-DRYING DEVICE**
SPRÜHTROCKENVORRICHTUNG UND ZUFUHRMITTEL FÜR DIESE SPRÜHTROCKENVORRICHTUNG
DISPOSITIF D'ATOMISATION ET MOYENS D'ALIMENTATION DE CE DISPOSITIF

(30) Priority: 25.04.2002 NL 1020469
(43) Date of publication of application: 19.01.2005
(73) Proprietor: Carlisle Process Systems B.V, 8401 GB Gorredijk (NL)
(72) Inventor: BOERSEN, Antonius, Cornelis, NL-8391 ME Noordwolde (NL); FRISO, Willem, Martin, NL-8468 BA Haskerdijken (NL)
(74) Representative: Volmer, Johannes Cornelis
(86) International application number: PCT/NL2003/000306
(87) International publication number: WO 2003/090893

(56) References cited:
- EP-A- 0 380 275
- EP-A- 0 800 860
- NL-A- 8 602 952

## Description

The present invention relates to a spray-drying device, comprising
- a housing,
- at least one first feed means having a first spray opening, for feeding a first substance into the housing, the first substance being a liquid which is sprayed in a cone in a first outlet direction,
- at least one second feed means for feeding a second substance into the housing, the second substance being fed in a particle stream in a second outlet direction, the first and second outlet directions including an angle α with respect to one another, and
- flow-control means for controlling the flow of the first and second substances,
wherein at least one out of the first and second feed means comprises angle-adjustment means for adjusting the angle α, characterized in that the angle-adjustment means when the device is operating, are actuatable from outside the housing.

In the context of the present application, the term outlet direction is to be understood as meaning the direction which runs along a centre line which can be determined in the stream of material flowing out, i.e. generally the axis of this stream. In the case of a cone, the outlet direction is likewise the axis of the cone.

The angle α is to be understood as meaning the angle between the outlet direction of one stream of material flowing out which is under consideration and that of the second stream of material flowing out which is under consideration, which materials in each case originate either from first feed means or from second feed means. In a device comprising N first means and M second feed means, therefore, a total of (N + M) x (N + M - 1)/2 possible included angles α are of relevance. In a specific case with two first feed means and one second feed means, therefore, there are three relevant included angles α, namely the angle between the second feed means and each of the first feed means and the angle between the two first feed means.

A device of the type described in the preamble can be used for the spray-drying of substances which are suitable for this purpose. During spray-drying, optionally preconcentrated liquids, slurries, emulsions and the like are dewatered by being atomized and dried in generally heated air. The result is a product in powder form. However, this product often does not have an optimum particle size distribution, for example is not free of dust, and also physical properties, such as wettability, are often unsuitable for the intended use of the spray-dried product.

To tackle these problems, the spray-dried product can be subjected to an agglomeration treatment. In this case, by way of example, product which has already been spray-dried is fed back, as a stream of fine dry particles, to a spray mist of the product which is to be spray-dried. It will then be possible for droplets of the spray mist to stick to the fine particles, so that larger agglomerates with suitable properties can form. It is also possible to make two or more spray mists collide with one another. In this case too, it is possible to form agglomerates with the desired properties. In this case, the first and second substances are thus both liquids. The particle stream of the second substance may therefore contain fine particles or droplets or even a combination thereof.

Dutch Patent Application NL-A 8602952 describes, inter alia, a device for preparing a free-flowing, fat-containing powder. This device comprises a housing in which two atomizers for liquid, which are angled towards one another, and one atomizer for a recirculated fine fraction of the spray-dried product and a lecithin-containing substance are present. The atomizers respectively produce cones of droplets and an atomized stream of particles which overlap one another. The drop atomizer pipes can be displaced in the radial direction parallel to one another and may be vertically adjustable. Consequently, the degree of overlap can be adjusted in a number of ways. By adjusting this overlap, it is possible to adjust the adhesive power of the droplets up to a certain level and in this way to adjust the properties of the agglomerate which is to be obtained.

One problem of this device is that in practice the adjustment options are often insufficient to make a single spray-drying device suitable for obtaining a range of agglomerated or unagglomerated spray-dried products.

The document EP-A-0800860 describes a spray drying device comprising angle adjustment means for feed means.

It is an object of the present invention to provide a very flexible spray-drying device which makes it possible to obtain a wider range of spray-dried products.

In the context of the present invention, the term spray-drying is to be understood as meaning drying by means of spraying, for example in a situation without overlap, but also spray-dryirig with agglomeration, both of droplets from a spray cone with droplets from another spray cone and with dry fine particles. Combinations of these options are also possible.

For reasons of symmetry, it is not in principle important which of the two feed means is adjustable, and it is also possible for both feed means to be adjustable. For the sake of clarity, the following text only describes situations in which the first feed means comprises angle-adjustment means. Obviously, the situation in which the angle of the second feed means can be adjusted must also be considered in the same way.

By making the angle between the outlet direction of the cone of sprayed first substance and that of the particle stream of the second substance adjustable with the aid of the angle-adjustment means, it is possible to obtain a very considerable range of possible adjustments to the device within a small space, both in terms of the included angle α, i.e. of any overlap between two stream of first and/or second substance, and in terms of the (starting) point of overlap. With a large included angle, overlap occurs very quickly between the droplets of the atomized liquid and the particles from the particle stream. This may be favourable and sometimes even a precondition under circumstances in which the droplets rapidly lose their adhesive power. This is the case, for example, with a substance which is to be spray-dried and loses its adhesive power very quickly, for example protein-rich products, such as WPI, WPC and caseinates, and spray-cooked starches, or if a very hot drying gas is fed to the droplets. On the other hand, the angle can also be made small. In this case, the overlap can be made very small. The distance d from which a cone of sprayed liquid and particles from the particle stream start to overlap one another can in this way be adjusted very easily using a relatively small device.

In the context of the invention, the distance d is to be understood as meaning the length of the centre line of the cone of the first feed means from the spray opening to the centre line of the particle stream from the second feed means.

The distance d is one of the factors which influence the drying options and possibly also the adhesive power of the sprayed droplets. In combination with the velocity of the droplets, after all, this distance d determines the (shortest) time which the droplets would need to meet the particle stream and therefore the drying time. Other factors which obviously also play a role are the initial moisture content of the droplets and the rate of evaporation of moisture from the droplets, which in turn is determined by the product composition and properties of any drying gas used.

It should be understood that the above definition of the distance d must not be interpreted as exclusive or limiting. Other definitions are also possible; it is merely important to provide a good comparison measure. By way of example, d can also be understood to mean the shortest distance covered by a droplet from the cone of atomized liquid before it comes into contact with a particle from the particle stream. Since the droplets are formed at the location of the spray nozzle of the first feed means, this distance d is therefore equal to the distance from this spray nozzle to the particle stream, measured over the cone of sprayed droplets. If it should emerge that the outlet directions cross one another rather than intersect one another, it would be possible, for example, to look at the distance from the spray nozzle to that point at the outlet direction of the cone from the first feed means which lies closest to the outlet direction of the particle stream. Obviously, other definitions are also possible. These can be converted into one another by simple mathematics.

When converting the various distances d, depending on the definitions used, the shape of the one or more cones and that of the particle stream may also be of relevance. The cone from a first feed means may be solid but is generally hollow. In the former case, the droplets are ejected at an angle of between 0° and a maximum angle, and in the second case the droplets are in principle all ejected at the same angle. Obviously, there will be a random distribution of the droplets around these paths which have been indicated, but the paths of the droplets are substantially described thereby.

The shape of the particle stream is likewise not subject to any particular limitations. It may, for example, be an atomized cloud or a more or less hollow cone. In a preferred embodiment, however, the particle stream is a substantially cylindrical stream. This can, for example, be ejected from a cylindrical pipe with a straight opening and advantageously from a cylindrical pipe in which there is a filler body which interacts with the pipe in such a manner that a hollow particle stream is formed. This ensures better distribution and a better result of agglomeration. This embodiment generally relates to dry particles, for example recirculated fines.

In another preferred embodiment, the particle stream is droplets, either of the first substance or of a second, different substance. The particle stream is then usually a hollow or solid cone, as has already been described above.

The invention advantageously provides a spray-drying device in which the angle-adjustment means are designed to adjust the angle α to a first value, at which the cone and the particle stream substantially do not overlap one another, and to a second value, at which the cone and the particle stream do overlap one another. This offers the advantage of being able to choose between an overlap and no overlap, i.e. between agglomeration and pure spray-drying. Obviously, it is more advantageously also possible for the angle α to be set to other angles to provide even more possible variations. For example, it is sufficient if the absolute value of the angle α which is to be set is at least equal to the sum of the vertex angles of the emerging cone or particle stream, in order for there to be substantially no overlap. What this means is that the respective particle stream and cone do not overlap one another. In practice, on account of the random distribution of particles over outlet angles, for some individual particles there may be a slight overlap, but this is of no importance in the present context.

In the description which follows, this limit situation without any overlap will not always be referred to further. It should also be considered that in many cases, although by no means all cases, it may be advantageous if this situation can be set in a preferred embodiment. This possibility must be expressly included, albeit as an additional embodiment. The text which follows also refers to agglomerates formed by particles and droplets bonding to one another. This term is also to be understood as including pure spray-dried product.

A major advantage of the situation in which droplets move in (virtually) the same direction of flow as drying gas is that the droplets remain in the gas stream in question over a considerable distance. This leads to very homogenous drying as well as a low moisture content of virtually all the particles before they can come into contact with a wall of the device. Since dried particles are no longer sticky, much less soiling will then occur. This situation can very expediently be obtained with the flexible device according to the invention.

A preferred embodiment of the spray-drying device according to the invention comprises a plurality of first feed means which are arranged around a second feed means, the cone of a first feed means and the particle stream from the second feed means at least partially overlapping one another. A spray-drying device of this type offers the advantage that the capacity and homogeneity of the mixing can be increased considerably. Therefore, the agglomeration yield is increased as a result of the cones being mixed with one another. It is therefore possible, for example, to supply a denser particle stream for agglomeration. The cones from the plurality of first feed means can then still find sufficient particles to have a high efficiency.

An advantageous spray-drying device according to the invention is characterized in that the cones of at least two first feed means at least partially overlap one another. This results in the formation of regions with an overlap between the various cones of the first feed means. In these regions of overlap, the relative droplet density is greater than outside these regions. Agglomeration can be carried out particularly efficiently by enabling these regions of overlap to coincide with the particle stream.

In addition, the number of first feed means is not restricted to two, but rather is even preferably three or four or even more, in order to attain a still greater homogeneity of agglomeration. It is also not necessary for the cones of the first feed means to overlap one another. By way of example, it is also possible for the cones of the first feed means to overlap the particle stream separately from one another, for example at different heights, so that in principle separate agglomeration regions are formed and particular particle size distributions can be produced.

Moreover, it is possible for a plurality of groups of first and second feed means to be incorporated in the spray-drying device. By way of example, there are two or more second feed means, each with an associated first feed means. It is also possible for there to be two or more second feed means, around each of which two or more first feed means are grouped. In addition, cones from one or more first feed means could in each case overlap the particle streams from two or more second feed means. The person skilled in the art will be able to select the most appropriate arrangement according to his production requirements.

In an advantageous spray-drying device according to the invention, a first feed means comprises a pipe which ends in a spray nozzle and which comprises at least two pipe parts which are pivotably connected to one another, and the angle-adjustment means comprise means which are designed to adjust the angle between at least two pipe parts. In this way, it is in principle possible to set any desired angle in a simple and reliable way. In this case, the angle-adjustment means may, for example, comprise a hinge joint or a ball joint or any other means for adjusting an angle between pipe parts which is known in the prior art. The pipe may comprise two parts but may also comprise more parts. The provision of a plurality of pipe parts offers the advantage that the delivery position of the cone of droplets can in principle be set independently of the delivery angle. Obviously, it is also possible for a plurality of first feed means to comprise a pipe as described with angle-adjustment means, and one or more second feed means could also be formed in this manner.

A first feed means is advantageously pivotably secured to the housing. This method of securing allows the desired outlet direction, in other words the angle between the different feed means, and the distance between them to be set in a very simple and reliable way. This is because there is no need for any moving parts, such as hinges, in the housing to be provided in or in the vicinity of droplets or particles from feed means. As a result, there can be no disruptive soiling or other disadvantageous effects for such parts. Moreover, when the device is operating, it is possible to change the setting if an altered formulation, altered product conditions, properties of the product formed or any other cause gives reason to do so.

One possible embodiment of a pivotably secured first feed means is, for example, an optionally rigid pipe or other body made from one piece which is secured to the wall of the housing by means of a hinge, joint, ball joint or the like. Obviously, the form of the first feed means is not restricted to a pipe, but rather the first feed means may adopt any suitable form, for example the assembly of two or more pipe parts which can move with respect to one another as described above.

The hinge, joint, etc. is preferably located on the outer side of the housing wall, the feed means projecting through the housing wall. The section which lies outside the housing can then be actuated in a simple way in order to set the desired direction of flow of the feed means. Even if the hinge, etc. is located against the inner side of the housing wall, simple actuation is still possible.

Starting from a substantially vertical arrangement of and outlet directions in the spray-drying device, the first feed means can be secured to both the top side and the side wall of the housing. In theory, it can also be secured to the underside, in which case the feed means acts as a type of riser, but in practice this situation will not often occur. Although it is possible for the spray-drying device to be arranged in a position other than substantially vertical, this will also not often occur, since it is then not possible to use the force of gravity to guide the droplets and the particle stream.

It is advantageously possible to adjust the height of first feed means with respect to the second feed means. In another advantageous embodiment of the spray-drying device according to the invention, the radial distance of first feed means with respect to the second feed means can be adjusted. More advantageously, the height and radial distance of the first feed means can be adjusted simultaneously.

In this context, the word height should be understood as meaning the distance from the outlet opening of the second feed means, as seen in the main supply direction of the said second feed means. In practice, this often simply means the normal vertical height, but the possibility of this word denoting a different orientation is not ruled out. The term radial distance should be understood as meaning the distance from the outlet opening of the first feed means to the axis of the particle stream from the second feed means, obviously measured in a plane perpendicular to the said axis.

Allowing the height of the first feed means additionally to be adjusted creates an additional means of influencing the mixing of cone and particle stream, in particular if their outward directions are not parallel. In the very restricted case wherein first and second feed means have outlet directions which are parallel to one another, the height of the first feed means can be displaced parallel to its own outlet direction and a second feed means supplies a cylindrical particle stream, there may nevertheless be altered agglomerate properties, even though the distance from the cone of droplets to the particle stream and therefore the process of agglomeration itself substantially does not change, since the distance over which and the time during which the agglomerates will move (and therefore dry out etc.) towards other parts of the spray-drying device will change. Moreover, it is in this way possible to have a beneficial influence on deposition of powder or agglomerates on the wall of the device. In all other, less restricted circumstances, it will also be possible to influence the agglomeration itself, for example through a droplet density, a adhesive power thereof, etc. changing as a result of the height of the first feed means being altered. Obviously, it is also possible to make the height of a second feed means adjustable or even to make the height of both feed means adjustable.

The above considerations are also highly valid for the adjustability of the radial distance between the first and second feed means. This will almost always affect the agglomeration properties, for example on account of a different droplet density or moisture content in the droplets from the cone.

Obviously, a combination of various adjustment options mentioned above is also possible. For example, it is possible to make the height and radial distance of a first feed means adjustable by enabling it to run obliquely and enabling it to be displaced parallel to its own axis. Obviously, the abovementioned adjustment options could also be made independent of one another. In combination with the angle-adjustment option, preferably by means of two or more pipe parts or a flexible pipe, it is in this way possible to provide a spray-drying device which is extremely flexible with regard to the properties of the spray-dried products which are to be obtained.

When the device is operating, the angle-adjustment means are preferably actuatable from outside the housing. As has already been stated above, this offers the advantage that it is possible to react to altered production conditions or requirements very quickly and flexibly. For example, it is possible to change over to a different formulation without having to interrupt production. This was hitherto not the case or was only possible in a highly user-unfriendly way, because the housing had to be opened in order to allow the setting of the feed means to be altered, which often involved a large number of operations with a high risk of errors.

The invention also relates to a feed means for use in a spray-drying device according to claim 13. The advantages discussed above also apply to the associated feed means considered on its own, for example by being incorporated in existing dryers, and will therefore only be discussed briefly below.

A feed means of this type offers the desired flexibility with regard to the properties of spray-dried material which can be obtained using it when it is employed in a spray-drying device. The feed means can be used in existing spray-drying devices by exchanging it for the feed means which has been used hitherto. This allows simple upgrading of the device.

Advantageously, the pipe comprises at least two pipe parts which are pivotable with respect to one another, and the angle-adjustment means comprise first angle-adjustment means which are designed to adjust the angle between at least two pipe parts.

A first feed means preferably comprises second angle-adjustment means, by which the first feed means is pivotably secured to a wall. It should be noted that these second angle-adjustment means may also be the only angle-adjustment means of the feed means. The wall is preferably selected from the side or top walls of a spray-drying device, although it is not in principle limited to this choice. It is also possible for a feed means according to the invention to be combined with a wall or wall part of this nature. In this way it is possible, for example, to create a type of cover with one or more feed means for a spray-drying device, so that existing devices can be converted very quickly and easily. It is also conceivable to create an entire head of a spray-drying device.

According to the invention, the angle-adjustment means are actuatable from outside the spray-drying device. This makes the feed means more flexible in use in that the device in which the feed means is used does not have to be opened to change the setting of the feed means.

By way of example, there may be a mechanical control or some other form of control, for example via cables, handwheels or levers. However, it is preferable for the angle adjustment to be automated, i.e. there are small servomotors in the angle-adjustment means, in the form of control motors, stepper motors with stepper switches, etc. It is even possible in this way to enable the angle-adjustment means to carry out an optionally periodic movement in order in this way to be able to obtain yet more particle size distributions and product properties.

Obviously, in the embodiment in which the feed means is pivotably secured to a wall, it is the case that, in particular if the angle-adjustment means are located on the outer side of the spray-drying device, these specific angle-adjustment means can be actuated directly, since they are already outside the device. In this context, consideration may be given to a directly driven ball joint and the like.

Furthermore, it is advantageous to know what the consequences of changing the angle setting will be for the spray cone and spray direction. This can be determined with the aid of a simple calibration or alternatively by means of geometric calculations. The calculated or calibrated settings can then easily be represented on, for example, a graduated scale or other suitable readout. It is also possible to use angle sensors or other position sensors for positioning the angle-adjustment means. Other elements for further automation of the adjustment, such as limit switches, connections to monitors and other display means and control rooms for central operation, etc. can also be provided. The advantages of automation of this nature are clear: simple and rapid operation resulting in little loss of production time and considerable flexibility when changing the product (properties) produced, and also, for example, the option of adjusting a large number of installations centrally and even with them coupled to one another.

It should be clear that the abovementioned characteristics relating to automated angle-adjustment means can be applied to any type of angle-adjustment means, for example those relating to the outlet angle of the feed means, such as the pivotable pipe parts, but also, for example, to the rotation about the axis of the feed means themselves, etc.

The invention will be explained below, by way of non-limiting example, with reference to the appended drawing, in which:
- Figure 1 shows a diagrammatic cross-sectional view through part of a spray-drying device according to the invention;
- Figure 2 shows a side view of a spray-drying device with first feed means in two different positions;
- Figure 3 shows an example of feed means pivotably secured to a wall of a housing; and
- Figure 4 diagrammatically depicts yet another embodiment.

Throughout the figures, identical reference symbols denote identical components.

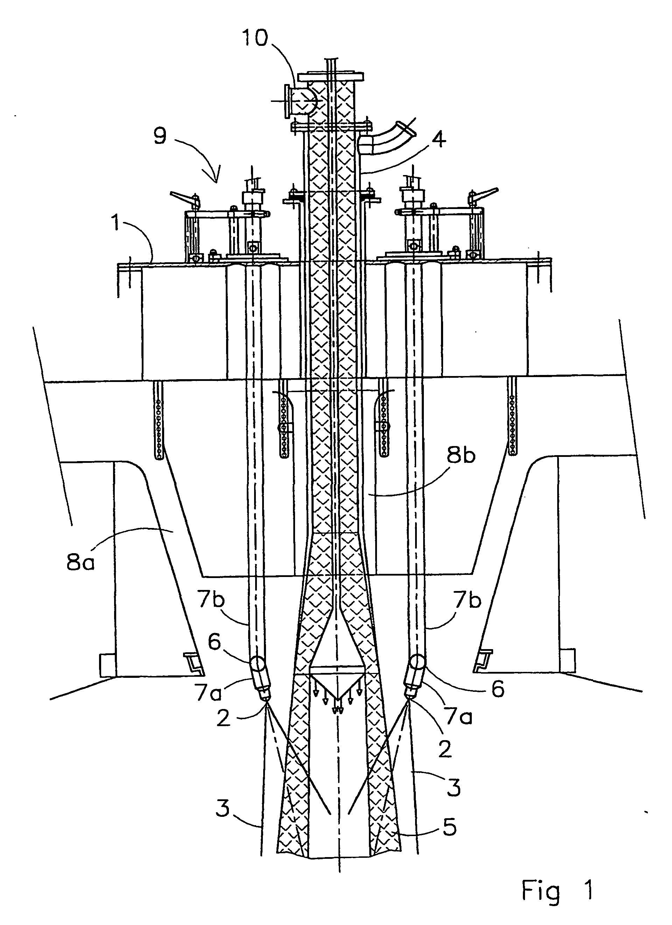

In Fig. 1, 1 denotes a section of a housing of a spray-drying device. 2 denotes first feed means which spray cones 3 of droplets. In this case, second feed means 4 ejects a hollow stream of fine, dry particles 5. 6 denotes angle-adjustment means which are able to adjust the angle between pipe parts 7a and 7b.

8a and 8b denote a main drying gas stream and an additional drying gas stream, respectively.

9 denotes second angle-adjustment means. Dry fine particles 5 can be supplied or returned via return pipe 10.

The section of a spray-drying device shown is, for example, the top of a complete installation. In this case, by way of example, there may be columns beneath it, in which further drying of the agglomerated products takes place. There may also be a fluidized bed or the like beneath it. However, none of this will be dealt with in any detail.

First feed means 2 may be spray nozzles which are known in the prior art for spraying a liquid which is to be spray-dried. This may therefore be a low- or high-pressure spray nozzle, a two-fluid spray nozzle, etc. These nozzles generally form a hollow cone 3 of droplets, although a filled cone or some other shape is not ruled out. The cone vertex angle of the feed means 2 can in principle be selected as desired. This spray angle or cone vertex angle is preferably between 0° and 120°, more preferably between 20° and 100°.

The first feed means 2 comprise two pipe parts 7a and 7b, the orientation of which with respect to one another can be adjusted with the aid of angle-adjustment means 6. Angle-adjustment means 6 advantageously comprise, for example, an electric or other motor or a hinge, joint, etc. which can be actuated remotely with the aid of cables or in some other way. In this way, it is easy to change the angle setting without the spray-drying device having to be opened. This gives the advantage that, for example, there is no need to wait until the device has cooled sufficiently or can be adjusted in some other way. Even when the device is operating, the setting can easily be altered in a user-friendly and rapid way, for example if different agglomerate properties are desired or agglomeration is no longer desired.

Drying gases are advantageously fed to the sprayed droplets and/or the agglomerates. 8b and 8b respectively denote a main drying gas stream and an additional drying gas stream. The drying gas may, for example, be dry and/or heated air, nitrogen, etc. The additional drying gas stream may also be a different gas or a gas with different drying parameters which are suitable for a different region in the spray-drying device. The person skilled in the art will be able to select appropriate drying gases as desired.

During the spray-drying and/or agglomeration, a defined particle size distribution will be formed. If a not inconsiderable proportion of the particles are too small for the desired product, these particles can be returned to the agglomeration region via return pipe 10. These particles are extremely suitable for droplets to agglomerate with so as to form larger complexes having the desired properties.

It is also possible to obtain the dry fine particles from another source, which has the advantage that their properties are completely fixed in advance and do not vary with the production process.

An important comment at this point is that it is not even imperative that dry fine particles be supplied to the agglomeration process. In fact, the sprayed droplets may already form particles which agglomerate with one another to form agglomerates having the desired properties. The advantages of the invention relating to adjustability of the spray-drying device, such as adjustability during operation, are also entirely valid for a spray-drying device without second feed means. Moreover, the device according to the invention is advantageously able to carry out pure spray-drying, i.e. pure drying of droplets without them colliding with other particles. The major advantage of a device of this type is its extremely flexible range of settings.

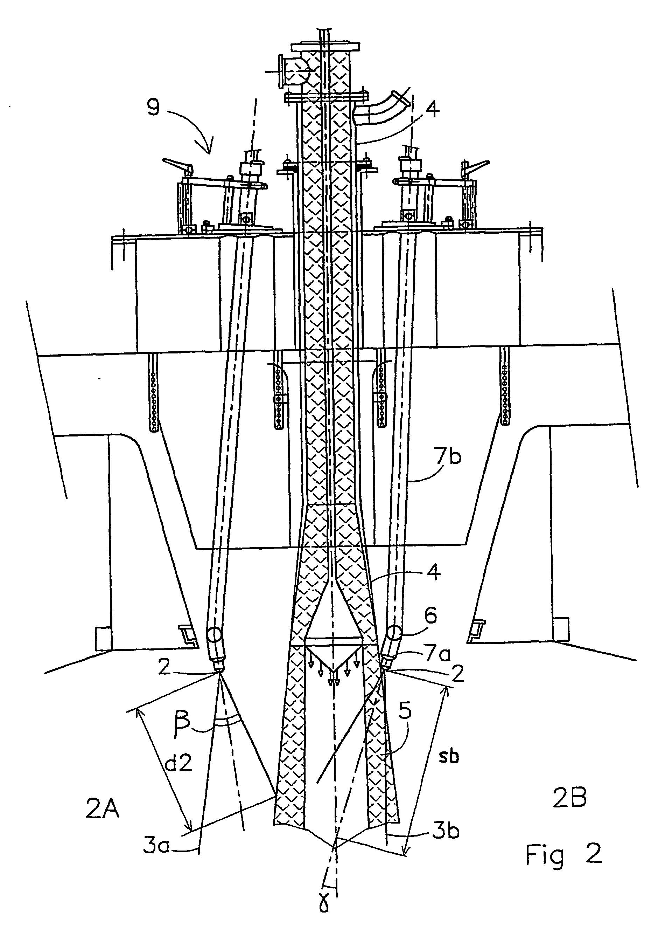

Fig. 2 shows a side view of a spray-drying device with first feed means in two different positions, 2A and 2B.

2A shows a first feed means in a first position, and 2B shows a first feed means in a second position, in which positions a cone 3a and 3b, respectively, is sprayed out, both with a vertex angle β.

Second feed means 4 supplies a stream of dry fine particles 5.

Cone 3a comes into contact with stream 5 at distance d2 from the second feed means 4, while cone 3b comes into contact with stream 5 at distance d1 equal to zero, i.e. immediately.

sb denotes the distance between the intersection point of the outlet directions of the first feed means and the second feed means 4 as indicated in case 2B. Obviously, a similar distance can also be indicated in situation 2A. It is possible to determine a simple geometric relationship between the distance d and the distance s in any situation, which relationship is dependent, inter alia, on the vertex angle β of the cone, if appropriate the angle of divergence of the particle stream, the horizontal distance between the first and second feed means and the outlet direction of the first feed means. This will not be dealt with in any further detail at this point. However, it is the case that the properties of the agglomerate are partly determined by the distances d and/or s. As has been stated, these distances can be calculated geometrically, but may also be determined using a simple calibration procedure.

In practice, the desired properties of the spray-dried product and/or the agglomerates, including the particle size distribution, will depend not only on the distance d at which the overlap begins but also, for example, on the mean distance at which overlap occurs. This distance can be indicated by the distance s between the point of intersection of the outward directions of cone 3 and stream 5, for example distance sb in part-Figure 2B. In the figure, cone 3b intersects the stream 5 at distance sb.

The cones 3a and 3b represent only two positions from an entire range of options. For example, each position between these positions is also possible. Moreover, greater values than those shown in the figure are also possible for the angle γ between the vertical in the figure and the outlet direction of the righthand first feed means (cone 3b), as well as the value zero, resulting in a parallel emerging flow, and negative values, in which case, therefore, the outlet directions of the feed means diverge. In the latter case, it is recommended for the negative angle γ to be selected in such a manner that there will still be some overlap between the spray cone and the particle stream. It should be noted that the angle γ selected will be dependent on the vertex angle β. In practice, γ is often between -20° and +30°, and β is often between 30° and 100°, although in both cases other angles are possible if desired. Since in the figure the outlet direction of the central second feed means coincides with the vertical, according to the invention the angle α between a first feed means and the second feed means is therefore equal to the relevant angle γ of the said first feed means.

For practical reasons, only the angle γ of cone 3b is indicated in the figure. Obviously, an angle of this type can also be assigned to cone 3a. The sign depends on the direction with respect to the other material stream under consideration: a positive angle γ is associated with outlet directions which are directed towards one another, and a negative angle γ is associated with outlet directions which are directed away from one another.

It can be seen from the figure that for the second cone 3b overlap with the stream 5 takes place straight away at a distance zero. It would be possible to use this position if the adhesive power or other properties of the sprayed liquid are sufficient as soon as it leaves the spray opening. In fact, it would even be possible to select a bottom section at right angles, which would cause the second feed means to have an outlet direction perpendicular to the outlet direction of stream 5. Distance d1 can then also be equal to 0. In the other cone position 3a which is illustrated, the corresponding distance d2 is very great. This position can be used, for example, if virtually dry droplets are desired in order to obtain much less agglomeration.

The distance d2 in the figure can be increased still further by also making use of the angle-adjustment means 6. By setting a different angle it is even possible to obtain parallel outlet directions for the cone 3 and the stream 5. It is therefore also possible for the outlet direction of and the radial distance between the feed means to be adjusted independently of one another. The latter option may be important in conjunction with the use of a drying gas stream which, for example, lacks homogeneity.

In Figure 2, second feed means 2, which are pivotably secured to the wall of the housing, have been selected. This means that if, as a result of the angle-adjustment means 9 being pivoted, the outlet direction is changed, the radial distance between outlet opening of the second feed means 2 and the outlet opening of the first feed means 4 also changes. This change can be decoupled by combining the pivotable mounting with two or more pivotable pipe parts. Obviously, the length of the pipe parts 7a, 7b, etc. then has to be selected appropriately.

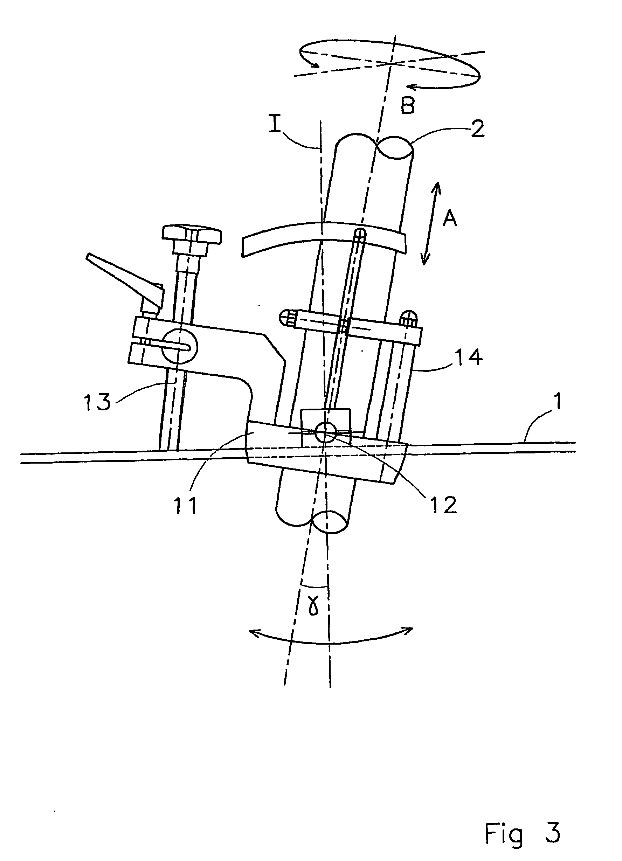

Figure 3 shows an example of pivotable securing of feed means to a wall of a housing.

In this figure, 1 denotes a housing to which a first feed means 2, which is held in a holding device 11, is secured via a ball joint 12. 13 denotes an angle-adjustment means, and 14 denotes a height-adjustment means.

The ball joint 12 enables feed means 2 to be pivoted in all directions. In this way, with the aid of angle-adjustment means 13, for example a first setscrew, the angle γ can be adjusted by turning the setscrew to a lower or higher position. The angle γ is in this case the angle between the outlet direction of the feed means and the vertical. The angle α according to the invention has to be determined on the basis of the outlet direction of the other feed means which is to be considered. In the case of two first feed means arranged mirror-symmetrically, α is equal to 2γ, while the angle α according to the invention for one vertical central second feed means will be equal to γ. It will be easy to determine the correct angle α.

Feed means 2 can be displaced in the axial direction, indicated by arrow A, in holding device 11 with the aid of height-adjustment means 14, for example a second setscrew. In this way, it is possible to alter the distance by which the feed means projects into the housing. In this way, it is also possible to alter the position of overlap between the cone of droplets and the stream of dry fine particles.

Moreover, it is still possible to rotate the assembly of feed means 2 and adjustment means 11, 13, 14 about axis I, in the direction indicated by arrow B, via ball joint 12. The overlap between cone of droplets and stream of fine dry particles can also be altered in this way. In this context, it should be noted that in mathematical terms the angle included by the first and second feed means changes as a result of the feed means being rotated. However, in the context of the present invention, in terms of the angle-adjustment means and the setting of the angle between first and second feed means, the intention is always to refer to the situation in which the outlet directions of the first and second feed means lie in one plane, i.e. intersect one another or run parallel to one another, but do not cross one another. In this case, any rotation has to be considered as an additional effect, with associated drawbacks of a greater proportion of the stream of droplets directed towards the side wall of the housing.

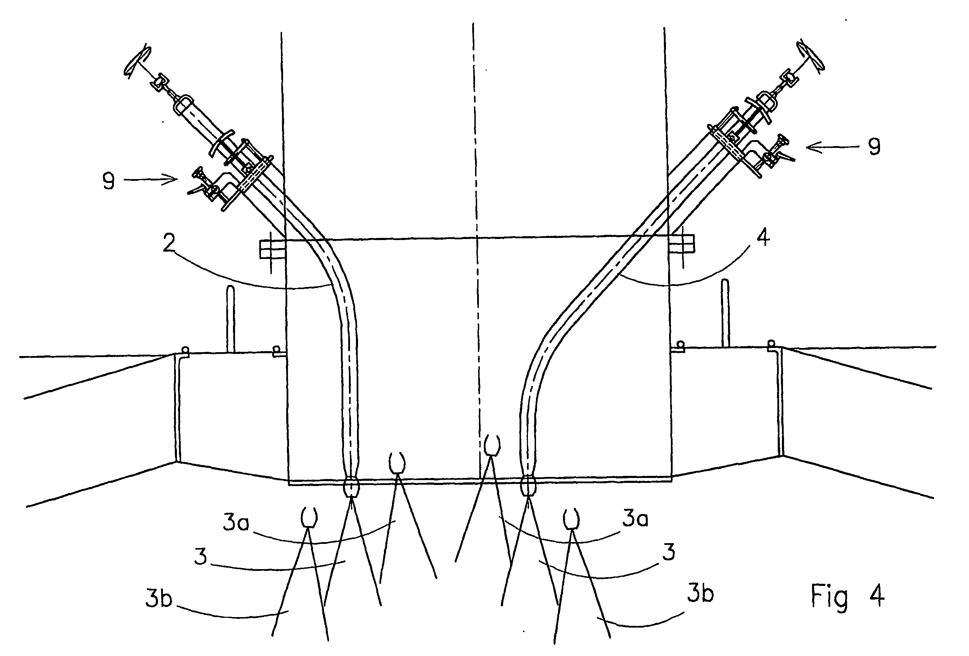

Figure 4 diagrammatically depicts another, highly flexible embodiment of the device according to the invention in three positions. In this case, the device comprises a first feed means (2) and a second feed means (4), which are both provided with angle-adjustment means 9.

In this case, the first and second feed means are both means for spraying a liquid. Therefore, in this case there is no stream of fine dry particles. The feed means 2 and 4 are shown in a position 3 with their outlet directions parallel and downward. In this case, there is only a small amount of overlap and agglomeration. In position 3a, the feed means 2 and 4 are directed more towards the inside. There is more overlap and a greater degree of agglomeration. In position 3b, the feed means 2 and 4 are directed more towards the outside. There is scarcely any overlap or agglomeration. This situation therefore represents pure spray-drying, while, moreover, there is scarcely any soiling of the walls, since the particles cover a great distance and will therefore be virtually dry.

The angle-adjustment means 9 correspond to those shown in Figure 3. These are in this case the only angle-adjustment means.

The spray-drying device according to the invention can be used with success for the treatment of products, in particular agglomerates, which have to have certain specific properties, such as solubility in water, milk, etc. By setting an appropriate overlap distance by varying the angle included between the feed means, it is possible to determine the shape, structure, density, etc. of the agglomerates which are formed. Examples of desired products are instant dessert powders, agglomerated starch products and maltodextrins, powdered milk, etc.

### EXAMPLE

Tests were carried out in a Stork wide body dryer for the production of "Ca caseinate" using the system with a plurality of spray nozzles from the prior art and a system with a plurality of spray nozzles according to the invention, known as "lances on rockers". When the spray nozzle lances from the prior art were used, the drying performance was inadequate, resulting in excessive soiling of the dryer.

Soiling of the dryer is related to various process and design parameters, but one significant parameter is the length of the drying path of a spray mist in the inlet stream of hot air. If the spray nozzle can be positioned at a maximum distance from the centre of the air inlet, this path is maximized. The drying is then correspondingly more efficient and will lead to less deposition of product. In the case of agglomeration, spray nozzles are positioned at a shorter distance from one another and more deposits will be expected. However, the mixing of sprayed drops with dry fine particles prevents the formation of deposits provided that the mixing is efficient and homogenous.

The dryer which is to be used, with a typical water evaporation capacity of approximately 2000 kg/h, was equipped with an external fluidized bed for final adjustment of the product moisture content and for cooling of the product. Fine powder particles which were still present in the outlet air leaving the chamber and fluidized bed were separated out in a bag filter housing. It was possible for these dry fine particles to be returned to the atomization region if an agglomerated product was to be produced.

The atomization of the Ca caseinate was carried out using two-fluid nozzles which were arranged on spray lances. Each spray lance has two feed lines, one for the liquid product and one for the gas. Four two-fluid nozzles were used for atomization, and approximately 700 kg of liquid Ca caseinate per hour were supplied to each nozzle. The width of the air inlet of the dryer was 600 mm. The spray lances according to the prior art had an angled top with a length of 20 cm and an inclination of 15° with respect to the vertical. The spray lances were mounted eccentrically in base plates known from the prior art. It was possible for the base plates known from the prior art to be rotated, and therefore for the cross section of the circle on which it was possible to position the spray nozzles to be varied. Furthermore, it was possible for the spray lances themselves to be rotated about their own axis, enabling the direction of the spray cone with respect to the hot inlet air to be retained. The range from minimum distance to maximum distance for the spray nozzles known from the prior art was from approximately 150 mm to 340 mm. The range from the minimum to maximum intersection distances for the spray cones was then from 280 mm to 640 mm beneath the spray nozzle outlets. To obtain the appropriate agglomeration conditions for Ca caseinate, the spray nozzles were positioned at a distance of 270 mm, corresponding to an intersection distance of approximately 500 mm beneath the outlet from the spray nozzles.

To summarize, the drawbacks associated with the system having the multiple spray nozzles known from the prior art were as follows:
1. It was not possible to change the spray nozzle positions when the dryer was operating, for reasons of operator safety. Furthermore, changing the spray nozzle was a time-consuming and labour-intensive operation. These were reasons to shut down the dryer if it was necessary to select a different spray nozzle position. This caused a production time loss of approximately 2 hours.
2. The dryer also had to form a non-agglomerated product. Although this was possible, excessive deposits of product were formed as a result of the fact that it was impossible to make the distance to be set between the spray lances large enough. Deposits on the dryer cone also caused a loss of product and production time, since the dryer had to be cleaned in the dry state at least once a week.
3. The time required to clean the dryer chamber in the dry state was approximately 4 hours.

To overcome the above drawbacks, the tips of the spray lances were shortened to 10 cm and the inclination of the lance tip with respect to the vertical was reduced to 10°. These changes ensured that it was possible to increase the distance to be set with respect to the spray nozzles, but at the same time meant that the minimum distance became too great to achieve efficient agglomeration. Furthermore, it was still impossible to change the lance positions while the dryer was operating.

Therefore, the lances were installed on pivot joints (rockers) according to the invention. The shortest distance was now 145 mm and the maximum distance 470 mm. Furthermore, the maximum intersection distance became much greater, up to a maximum of 1600 mm. The shortest intersection distance is still no more than 300 mm, well below the 500 mm required for correct agglomeration.

To summarize, the advantages of the new nozzle arrangement according to the invention were as follows:
1. Agglomeration and precision setting of agglomeration are still possible, as is clear from the fact that a very short distance between the lances is still possible in combination with a very short intersection distance.
2. It was possible to carry out changes to the lance and nozzle positions while the dryer was operating and the operation of moving the four lances into a new position took less than 5 minutes. The advantage is a production time saving of about 2 hours.
3. In the case of unagglomerated product, deposits on the entire dryer wall were negligible: less than 10 kg/week. These deposits originally amounted to approximately 250 kg/week. Deposits were likewise negligible in the case of the production of agglomerated Ca caseinate.
4. In the dry state, it was no longer necessary to clean the dryer chamber, representing an additional production time saving of 4 hours per week.
5. It was possible to carry out changes to the nozzle positions safely and, moreover, in an operator-friendly manner.

The following table summarizes the above.

| Relevant nozzle positions with prior art lances and with lances on rockers according to the invention | | | |
|---|---|---|---|
| Type of lance | Lance characteristics | Minimum nozzle distance/ intersection distance in mm | Maximum nozzle distance/ intersection distance in mm |
| Prior lances on rotatable base plates | Lance tip: 15° Lance length: 20 cm | 150/280 | 340/640 |
| Modified prior art lances on rotatable base plates | Lance tip: 10° Lance length: 10 cm | 260/730 | 450/1275 |
| Lances on rockers according to the invention | Lance tip: 10° Lance length: 10 cm | 145/300 | 470/1600 |
| Optimum nozzle position for agglomeration: nozzle distance 270 mm, which corresponds to an intersection distance for the spray mists of 500 mm beneath the nozzle outlets | | | |

### Conclusion:

It was only possible to select satisfactory nozzle positions for correct agglomeration and spray drying with spray lances which were mounted on rockers according to the invention. Much more flexible spray-drying operation was possible, and in addition less maintenance was required.

## Claims

1. Spray-drying device, comprising
- a housing (1),
- at least one first feed means (2) having a first spray opening, for feeding a first substance into the housing (1), the first substance being a liquid which is sprayed in a cone (3; 3a, 3b) in a first outlet direction,
- at least one second feed means (4) for feeding a second substance into the housing (1), the second substance being fed in a particle stream (5) in a second outlet direction, the first and second outlet directions including an angle α with respect to one another, and
- flow-control means for controlling the flow of the first and second substances,
wherein at least one out of the first (2) and second (4) feed means comprises angle-adjustment means (6, 9) for adjusting the angle α, **characterized in that** the angle-adjustment means (6, 9), when the device is operating, are actuatable from outside the housing (1).

2. Spray drying device according to claim 1, **characterized in that** the angle adjustment means comprise an electric or other motor or a hinge or joint, which is actuatable remotely.

3. Spray-drying device according to any preceding claim, **characterized in that** a first feed means (2) comprises a pipe which ends in a spray nozzle and which comprises at least two pipe parts (7a, 7b) which are pivotably connected to one another, and **in that** the angle-adjustment means comprise first angle-adjustment means (6) which are designed to adjust the angle between at least two pipe parts (7a, 7b).

4. Spray-drying device according to any preceding claim, **characterized in that** a first feed means (2) is pivotably secured to the housing (1).

5. Spray-drying device according to claim 4, **characterized in that** the first feed means (2) comprises a second angle-adjustment means (9), by which the first feed means (2) is pivotably secured to the housing (1).

6. Spray-drying device according to any preceding claim, **characterized in that** the angle-adjustment means (6; 9) are designed to adjust the angle α to a first value, at which the cone (3; 3a, 3b) and the particle stream (5) substantially do not overlap one another, and to a second value, at which the cone (3; 3a, 3b) and the particle stream (5) do overlap one another.

7. Spray-drying device according to any preceding claim, **characterized in that** it comprises a plurality of first feed means (2) which are arranged around a second feed means (4), the cone (3) of a first feed means (2) and the particle stream (5) from the second feed means (4) at least partially overlapping one another.

8. Spray-drying device according to claim 7, **characterized in that** the cones (3; 3a, 3b) of at least two first feed means (2) at least partially overlap one another.

9. Spray-drying device according to one of the preceding claims, **characterized in that** the height of first feed means (2) is adjustable with respect to the second feed means (4).

10. Spray-drying device according to one of the preceding claims, **characterized in that** the radial distance between first feed means (2) and the second feed means (4) is adjustable.

11. Spray-drying device according to one or more of the preceding claims, wherein a first feed means (2) runs obliquely and is displaceable parallel to its own axis.

12. Spray-drying device according to one of the preceding claims, **characterized in that** the second feed means (4) comprise a cylindrical pipe in which there is a filler body which interacts with the pipe in such a manner that a hollow particle stream is formed.

13. Feed means (2, 4), comprising a pipe with an outlet opening, for feeding a material into a spray-drying device in an outlet direction, **characterized in that** the feed means is further provided with angle-adjustment means (6, 9) for adjusting the outlet direction, wherein the angle adjustment means comprise an electric or other motor or a hinge or joint, which is actuatable remotely.

14. Feed means (2, 4) according to claim 13, **characterized in that** the pipe comprises at least two pipe parts (7a, 7b) which are pivotable with respect to one another, and **in that** the angle-adjustment means comprise first angle-adjustment means (6) which are designed to adjust the angle between at least two pipe parts (7a, 7b).

15. Feed means (2, 4) according to claim 132 or 14, **characterized in that** the angle-adjustment means comprise second angle-adjustment means (9) for pivotably securing the feed means to a wall in an adjustable manner.

16. Feed means (2, 4) according to one of claims 13-15, **characterized in that** the angle-adjustment means (6, 9) are actuatable from outside the spray-drying device.

## Patentansprüche

1. Sprühtrocknungsvorrichtung, umfassend
- ein Gehäuse (1),
- mindestens eine erste Zufuhreinrichtung (2) mit einer ersten Sprühöffnung zum Zuführen einer ersten Substanz in das Gehäuse (1), wobei die erste Substanz eine Flüssigkeit ist, die in einem Kegel (3; 3a, 3b) in einer ersten Auslassrichtung versprüht wird,
- mindestens eine zweite Zufuhreinrichtung (4) zum Zuführen einer zweiten Substanz in das Gehäuse (1), wobei die zweite Substanz in einem Partikelstrom (5) in einer zweiten Auslassrichtung zugeführt wird, wobei die erste und die zweite Auslassrichtung in Bezug zueinander einen Winkel α einschließen, und
- Stromsteuereinrichtungen zum Steuern des Stroms der ersten und der zweiten Substanz,
wobei mindestens eine von der ersten (2) und der zweiten (4) Zufuhreinrichtung Winkelverstelleinrichtungen (6, 9) zum Verstellen des Winkels α umfasst,
**dadurch gekennzeichnet, dass** die Winkelverstelleinrichtungen (6, 9), wenn die Vorrichtung arbeitet, von außerhalb des Gehäuses (1) bedienbar sind.

2. Sprühtrocknungsvorrichtung nach Anspruch 1, **dadurch gekennzeichnet, dass** die Winkelverstelleinrichtungen einen elektrischen oder anderen Motor oder ein Scharnier oder Gelenk umfassen, das fernbedienbar ist.

3. Sprühtrocknungsvorrichtung nach einem vorangehenden Anspruch, **dadurch gekennzeichnet, dass** eine erste Zufuhreinrichtung (2) ein Rohr umfasst, das in einer Sprühdüse endet und das mindestens zwei Rohrteile (7a, 7b) umfasst, die schwenkbar miteinander verbunden sind, und dass die Winkelverstelleinrichtungen erste Winkelverstelleinrichtungen (6) umfassen, die ausgelegt sind, um den Winkel zwischen mindestens zwei Rohrteilen (7a, 7b) zu verstellen.

4. Sprühtrocknungsvorrichtung nach einem vorangehenden Anspruch, **dadurch gekennzeichnet, dass** eine erste Zufuhreinrichtung (2) schwenkbar am Gehäuse (1) befestigt ist.

5. sprühtrocknungsvorrichtung nach Anspruch 4, **dadurch gekennzeichnet, dass** die erste Zufuhreinrichtung (2) eine zweite Winkelverstelleinrichtung (9) umfasst, mittels derer die erste Zufuhreinrichtung (2) schwenkbar am Gehäuse (1) befestigt ist.

6. Sprühtrocknungsvorrichtung nach einem vorangehenden Anspruch, **dadurch gekennzeichnet, dass** die Winkelverstelleinrichtungen (6; 9) ausgelegt sind, um den Winkel α bis zu einem ersten Wert, bei dem der Kegel (3; 3a, 3b) und der Partikelstrom (5) einander im Wesentlichen nicht überlappen, und bis zu einem zweiten Wert, bei dem der Kegel (3; 3a, 3b) und der Partikelstrom (5) einander überlappen, zu verstellen.

7. Sprühtrocknungsvorrichtung nach einem vorangehenden Anspruch, **dadurch gekennzeichnet, dass** sie eine Mehrzahl von ersten Zufuhreinrichtungen (2) umfasst, die um eine zweite Zufuhreinrichtung (4) herum angeordnet sind, wobei der Kegel (3) einer ersten Zufuhreinrichtung (2) und der Partikelstrom (5) aus der zweiten Zufuhreinrichtung (4) einander mindestens teilweise überlappen.

8. Sprühtrocknungsvorrichtung nach Anspruch 7, **dadurch gekennzeichnet, dass** die Kegel (3; 3a, 3b) von mindestens zwei ersten Zufuhreinrichtungen (2) einander mindestens teilweise überlappen.

9. Sprühtrocknungsvorrichtung nach einem der vorangehenden Ansprüche, **dadurch gekennzeichnet, dass** die Höhe der ersten Zufuhreinrichtung (2) in Bezug zur zweiten Zufuhreinrichtung (4) verstellbar ist.

10. Sprühtrocknungsvorrichtung nach einem der vorangehenden Ansprüche, **dadurch gekennzeichnet, dass** der radiale Abstand zwischen der ersten Zufuhreinrichtung (2) und der zweiten Zufuhreinrichtung (4) verstellbar ist.

11. Sprühtrocknungsvorrichtung nach einem oder mehreren der vorangehenden Ansprüche, bei der eine erste Zufuhreinrichtung (2) schräg verläuft und parallel zu ihrer eigenen Achse verlagerbar ist.

12. Sprühtrocknungsvorrichtung nach einem der vorangehenden Ansprüche, **dadurch gekennzeichnet, dass** die zweiten Zufuhreinrichtungen (4) ein zylindrisches Rohr umfassen, in dem sich ein Füllkörper befindet, der mit dem Rohr in einer solchen Weise zusammenwirkt, dass ein hohler Partikelstrom gebildet wird.

13. Zufuhreinrichtung (2, 4), umfassend ein Rohr mit einer Auslassöffnung zum Zuführen eines Materials in einer Auslassrichtung in eine Sprühtrocknungsvorrichtung, **dadurch gekennzeichnet, dass** die Zufuhreinrichtung weiter mit Winkelverstelleinrichtungen (6, 9) zum Verstellen der Auslassrichtung versehen ist, wobei die Winkelverstelleinrichtungen einen elektrischen oder anderen Motor oder ein Scharnier oder Gelenk umfassen, der/das fernbedienbar ist.

14. Zufuhreinrichtung (2, 4) nach Anspruch 13, **dadurch gekennzeichnet, dass** das Rohr mindestens zwei Rohrteile (7a, 7b) umfasst, die in Bezug zueinander verschwenkbar sind, und dass die Winkelverstelleinrichtungen erste Winkelverstelleinrichtungen (6) umfassen, die ausgelegt sind, um den Winkel zwischen mindestens zwei Rohrteilen (7a, 7b) zu verstellen.

15. Zufuhreinrichtung (2, 4) nach Anspruch 13 oder 14, **dadurch gekennzeichnet, dass** die Winkelverstelleinrichtungen zweite Winkelverstelleinrichtungen (9) umfassen, um die Zufuhreinrichtung in einer verstellbaren Weise an einer Wand zu befestigen.

16. Zufuhreinrichtung (2, 4) nach einem der Ansprüche 13-15, **dadurch gekennzeichnet, dass** die Winkelverstelleinrichtungen (6, 9) von außerhalb der Sprühtrocknungsvorrichtung bedienbar sind.

## Revendications

1. Dispositif d'atomisation, comprenant :
- un logement (1),
- au moins un premier moyen d'alimentation (2) ayant une première ouverture d'atomisation, pour introduire une première substance dans le logement (1), la première substance étant un liquide qui est atomisé sous forme d'un cône (3 ; 3a, 3b) dans une première direction de sortie,
- au moins un second moyen d'alimentation (4) pour introduire une seconde substance dans le logement (1), la seconde substance étant introduite sous forme d'un flux de particules (5) dans une seconde direction de sortie, les première et seconde directions de sortie formant un angle α entre elles, et
- des moyens de contrôle de flux pour contrôler le flux des première et seconde substances,
dans lequel au moins un parmi les premier (2) et second (4) moyens d'alimentation comprend des moyens de réglage d'angle (6, 9) pour régler l'angle α, **caractérisé en ce que** les moyens de réglage d'angle (6, 9), lorsque le dispositif d'atomisation est en fonctionnement, sont actionnables depuis l'extérieur du logement (1).

2. Dispositif d'atomisation selon la revendication 1, **caractérisé en ce que** les moyens de réglage d'angle comprennent un moteur, de type électrique ou autre, ou une articulation ou un joint, qui peut être actionné à distance.

3. Dispositif d'atomisation selon l'une quelconque des revendications précédentes, **caractérisé en ce qu'**un premier moyen d'alimentation (2) est constitué d'un conduit se terminant par une buse d'atomisation et qui comprend au moins deux parties de conduit (7a, 7b) qui sont reliées entre elles de manière pivotante, et **en ce que** les moyens de réglage d'angle comprennent un premier moyen de réglage d'angle (6) qui est prévu pour régler l'angle formé entre au moins deux parties du conduit (7a, 7b).

4. Dispositif d'atomisation selon l'une quelconque des revendications précédentes, **caractérisé en ce qu'**un premier moyen d'alimentation (2) est fixé de manière rotative au logement (1).

5. Dispositif d'atomisation selon la revendication 4, **caractérisé en ce que** le premier moyen d'alimentation (2) comprend un second moyen de réglage d'angle (9), au moyen duquel le premier moyen d'alimentation (2) est fixé de manière rotative au logement (1).

6. Dispositif d'atomisation selon l'une quelconque des revendications précédentes, **caractérisé en ce que** les moyens de réglage d'angle (6, 9) sont conçus pour régler l'angle α à une première valeur, pour laquelle le cône (3 ; 3a, 3b) et le flux de particules (5) ne se chevauchent sensiblement pas mutuellement, et à une seconde valeur, pour laquelle le cône (3 ; 3a, 3b) et le flux de particules (5) se chevauchent sensiblement l'un et l'autre.

7. Dispositif d'atomisation selon l'une quelconque des revendications précédentes, **caractérisé en ce qu'**il comprend une pluralité de premiers moyens d'alimentation (2) qui sont disposés autour d'un second moyen d'alimentation (4), le cône (3) d'un premier moyen d'alimentation (2) et le flux de particules (5) du second moyen d'alimentation (4) se chevauchant mutuellement au moins en partie.

8. Dispositif d'atomisation selon la revendication 7, **caractérisé en ce que** les cônes (3 ; 3a, 3b) d'au moins deux premiers moyens d'alimentation (2) se chevauchent mutuellement au moins en partie.

9. Dispositif d'atomisation selon l'une quelconque des revendications précédentes, **caractérisé en ce que** la hauteur du premier moyen d'alimentation (2) est réglable par rapport au second moyen d'alimentation (4).

10. Dispositif d'atomisation selon l'une quelconque des revendications précédentes, **caractérisé en ce que** la distance radiale entre le premier moyen d'alimentation (2) et le second moyen d'alimentation (4) est réglable.

11. Dispositif d'atomisation selon l'une quelconque ou plusieurs des revendications précédentes, dans lequel un premier moyen d'alimentation (2) s'étend obliquement et est déplaçable parallèlement à son propre axe.

12. Dispositif d'atomisation selon l'une quelconque des revendications précédentes, **caractérisé en ce que** le second moyen d'alimentation (4) est constitué d'un conduit cylindrique contenant un corps de remplissage qui est en interaction avec le conduit de sorte à former un flux de particules creux.

13. Moyens d'alimentation (2, 4), constitués d'un conduit avec un orifice de sortie, pour introduire une matière dans un dispositif d'atomisation dans un sens de sortie, **caractérisés en ce que** les moyens d'alimentation comprennent en outre des moyens de réglage d'angle (6, 9) pour régler l'orientation de l'orifice de sortie, dans lesquels les moyens de réglage d'angle comprennent un moteur, de type électrique ou autre, ou une articulation ou un joint, qui peut être actionné à distance.

14. Moyens d'alimentation (2, 4) selon la revendication 13, **caractérisés en ce que** le conduit est constitué d'au moins deux parties de conduit (7a, 7b) pouvant être pivotées l'une par rapport à l'autre, et **en ce que** les moyens de réglage d'angle comprennent des premiers moyens de réglage d'angle (6) qui sont prévus pour régler l'angle formé entre au moins deux parties de conduit (7a, 7b).

15. Moyens d'alimentation (2, 4) selon la revendication 13 ou 14, **caractérisés en ce que** les moyens de réglage d'angle comprennent des seconds moyens de réglage d'angle (9) pour fixer de manière pivotante et réglable les moyens d'alimentation à une paroi.

16. Moyens d'alimentation (2, 4) selon l'une des revendications 13-15, **caractérisés en ce que** les moyens de réglage d'angle (6, 9) sont actionnables depuis l'extérieur du sécheur par atomisation.
